# EUROPEAN PATENT SPECIFICATION

(11) **EP 3 255 931 B1**
(45) Date of publication and mention of the grant of the patent: **07.08.2019**
(21) Application number: 16305665.8
(22) Date of filing: 07.06.2016
(51) Int. Cl.: H04W 52/02, H04W 88/06, H04L 12/26, H04L 29/08, H04B 1/713, H04W 24/08, H04W 4/70, H04W 74/04, H04W 76/20

(54) **CONFIGURING WIRELESS COMMUNICATIONS AND AN ADVERTISING EVENT ACCORDING TO MULTIPLE COMMUNICATION PROTOCOLS**
KONFIGURATION VON DRAHTLOSER KOMMUNIKATION UND WERBEEREIGNIS GEMÄSS MEHREREN KOMMUNIKATIONSPROTOKOLLEN
CONFIGURATION DE COMMUNICATIONS SANS FIL ET ÉVÉNEMENT DE PUBLICITÉ CONFORME À PLUSIEURS PROTOCOLES DE COMMUNICATION

(43) Date of publication of application: 13.12.2017
(73) Proprietor: NXP B.V., 5656 AG Eindhoven (NL)
(72) Inventor: LI, Hong, 5656 AG Eindhoven (NL); RIVIÈRE, Fabian, 14906 Caen CEDEX 9 (FR); GRAY, Christopher John, 5656 AG Eindhoven (NL)
(74) Representative: Bradler, Carola Romana

(56) References cited:
- US-A1- 2004 246 929
- US-A1- 2013 040 573
- US-A1- 2015 200 738

## Description

### OVERVIEW

Aspects of various embodiments are directed to configuring wireless communications of a combo-endpoint device according to two communication protocols and establishing an advertisement.

Various devices communicate according to a particular communication protocol. Some example protocols include Bluetooth and ZigBee. Both Bluetooth Low Energy (BLE) and IEEE 802.15.4 Wireless Personal Area Network (WPAN) devices provide key low power communication and are popular in the Internet of Things (IoT) new products, for applications, including wireless sensor network (WSN) applications, home automation, smart office or building, wearable devices and health care. Many of these applications, such as with temperature sensors, are battery powered and have low energy consumption, low event rate and low communication throughput.

Several technologies such as ZigBee (ZB), 6lowPAN and Thread are built upon the IEEE 802.15.4, and have the technical advantage to form and manage ultra-low power devices in low power networks, while BLE is widely used in mobile phones, convenient and preferable as the personal interface, but less advanced to form large low power networks effectively
These and other matters have presented challenges to efficiencies of communicating according to multiple communication protocol implementations, for a variety of applications.

US 2015/0200738 A1 describes that the locations of a plurality of network devices in a low power and lossy network (LLN) are determined along an intelligent wire. One or more neighboring devices for each network device in the plurality are identified based on the locations of the network devices along the intelligent wire. A communication schedule for the network devices is determined that prevents neighboring devices along the intelligent wire from transmitting on the same frequency. The network devices are assigned to communication time slots based on the communication schedule. The network devices are also assigned frequency offsets based on the communication schedule.

### SUMMARY

According to an aspect of the invention, there is provided a
A method for communicating between:
a combo-endpoint device configured to communicate according to either a frequency-hopping based protocol and a direct or parallel-sequence spread spectrum based protocol at a given time,
a wireless router, and
a wireless communication device,
the method comprising:
   monitoring communication patterns of wireless data communications between a wireless router and radio-communication circuitry of the combo-endpoint device;
   storing data indicative of communication times of the wireless router based on the monitored communication patterns;
   configuring a frequency-hopping (FH)-based protocol by defining connection periods according to time windows and selected frequencies for wireless communication of data between the wireless communication device and the radio-communication circuitry, and by establishing the time windows and time intervals for an advertisement event which do not conflict with the communication times of the wireless router;
   monitoring wireless data communication between the wireless communication device and the radio-communication circuitry and configured another FH-based protocol for communication between another wireless communication device and the radio-communication circuitry by providing time windows for the FH-based protocol for the other wireless communication device and which is prior to the time windows for the wireless communication device;
   identifying a removed connection between the wireless communication device and the radio-communication circuitry; and
   in response thereto, shifting the time windows for the other wireless communication device to a time prior to the communication times of the wireless router.

According to another aspect of the invention there is provided a combo-endpoint device configured to communicate according to either a frequency-hopping based protocol and a direct or parallel-sequence spread spectrum based protocol at a given time, the combo-endpoint device comprising:
radio-communication circuitry configured to communicate wirelessly with a wireless router according to a spread spectrum (SS)-based network protocol defined by the wireless router, and wirelessly with a wireless communication device via a frequency-hopping (FH)-based protocol, which defines connection periods according to time windows and selected frequencies, for communication of data between the wireless communication device and the radio-communication circuitry; and
data-communication scheduling circuitry configured to:
   monitor communication patterns of wireless data communications between the wireless router and the radio-communication circuitry to store data indicative of communication times of the wireless router;
   configure the FH-based protocol for communication between the wireless communication device and the radio-communication circuitry by providing time windows for the FH-based protocol which is prior to the communication times of the wireless router;
   establish time intervals for an advertisement event after communications times of the wireless router for connecting the radio-communication circuitry to other wireless communication devices;
   monitor wireless data communication between the wireless communication device and the radio-communication circuitry and configured another FH-based protocol for communication between another wireless communication device and the radio-communication circuitry by providing time windows for the FH-based protocol for the other wireless communication device and which is prior to the time windows for the wireless communication device;
   identify a removed connection between the wireless communication device and the radio-communication circuitry; and
   in response thereto, shift the time windows for the other wireless communication device to a time prior to the communication times of the wireless router.

Various embodiments are directed to issues such as those addressed above and/or others which may become apparent from the following disclosure concern configuration of wireless communications, including an advertising event, of a combo-endpoint device according to multiple communication protocols and such that the communications according to the respective communication protocols are non-conflicting.

Embodiments of this invention involve monitoring communication patterns of wireless data communications between a wireless router and a combo-endpoint device and configuring a frequency-hopping-based protocol for wireless communications between a wireless communication device and the combo-endpoint device that does not substantially conflict with the monitored communication patterns and that includes an advertising event.

In a more specific example embodiment, a method embodiment is used for communicating between a combo-endpoint device and each of a wireless router and a wireless communication device. The method includes monitoring communication patterns of wireless data communications between a wireless router and radio-communication circuitry of a combo-endpoint device and storing data indicative of communication times of the wireless router based on the monitored communication patterns. In some embodiments, the communication patterns of wireless data communications between the wireless router and other wireless devices are additionally monitored. Further the method includes configuring a frequency-hopping based protocol by defining connection periods according to time windows and selected frequencies for wireless communication of data between the wireless communication device and the radio-communication circuitry, and by establishing the time windows and time intervals for an advertisement event which do not substantially conflict with the communication times of the wireless router.

In another specific embodiment, a device embodiment includes radio-communication circuitry and data-communication scheduling circuitry. The radio-communication circuitry communicates wirelessly with a wireless router according to a spread spectrum-based network protocol defined by the wireless router, and wirelessly with a wireless communication device via a frequency hopping-based protocol. The frequency hopping-based protocol defines connection periods, according to time windows and selected frequencies, for communication of data between the wireless communication device and the radio-communication circuitry. The data-communication scheduling circuitry monitors communication patterns of wireless data communications between the wireless router and the radio-communication circuitry to store data indicative of communication times of the wireless router. The data-communication scheduling circuitry also configures the frequency-hopping based protocol for communication between the wireless communication device and the radio-communication circuitry by providing time windows for the frequency-hopping based protocol which is prior to the communication times of the wireless router, and establishes time intervals for an advertisement event after communications times of the wireless router for connecting the radio-communication circuitry to other wireless communication devices.

In another specific embodiment, a device includes radio-communication circuitry and data-communication scheduling circuitry. The radio-communication circuitry communicates wirelessly with a ZigBee router according to a direct sequence spread spectrum (DSS)-based network protocol defined by the ZigBee router, and wirelessly with a wireless communication device via a frequency-hopping spread spectrum (FHSS)-based protocol which defines BLE-device connection periods, in time windows, for communication of data between the wireless communication device and the radio-communication circuitry. The data-communication scheduling circuitry monitors communication patterns of wireless data communications between the ZigBee router and the radio-communication circuitry to store data indicative of communication times of the ZigBee router. Further, the data-communication scheduling circuitry establishes coordinated wireless communications schedules for the radio-communication circuitry to communicate with both the wireless communication device and the ZigBee router by configuring the FHSS-based protocol for communication between the wireless communication device and the combo-endpoint device with selected time windows for FHSS-based data communications and by providing the selected time windows at intervals that are prior to the communication times of the ZigBee router, and establishing an advertisement event at time intervals that are after communications times of the ZigBee router for connecting the radio-communication circuitry to other wireless communication devices.

The above discussion/summary is not intended to describe each embodiment or every implementation of the present disclosure. The figures and detailed description that follow also exemplify various embodiments.

### BRIEF DESCRIPTION OF FIGURES

Various example embodiments may be more completely understood in consideration of the following detailed description in connection with the accompanying drawings, in which:
FIG. 1 illustrates an example apparatus, in accordance with the present disclosure;
FIG. 2 is an apparatus-level diagram illustrating an example of a combo-endpoint device wirelessly communicating between each of a wireless router and a wireless communication device, in accordance with the present disclosure;
FIG. 3 is an example configuration of wireless communications of a combo-endpoint device between each of a wireless router and a wireless communication device according to two communication protocols, in accordance with the present disclosure;
FIG. 4 is a flow chart illustrating an exemplary set of activities and/or data flow for an apparatus of the type implemented in a manner consistent with FIG. 1 and FIG. 2, in accordance with the present disclosure; and
FIG.5 is a flow chart illustrating an exemplary set of activities and/or data flow for an apparatus of the type implemented in a manner consistent with FIG. 1 and FIG. 2, in accordance with the present disclosure.

While various embodiments discussed herein are amenable to modifications and alternative forms, aspects thereof have been shown by way of example in the drawings and will be described in detail. It should be understood, however, that the intention is not to limit the disclosure to the particular embodiments described. On the contrary, the intention is to cover all modifications, equivalents, and alternatives falling within the scope of the disclosure including aspects defined in the claims. In addition, the term "example" as used throughout this application is only by way of illustration, and not limitation.

### DETAILED DESCRIPTION

Aspects of the present disclosure are believed to be applicable to a variety of different types of apparatuses, systems and methods involving configuring a frequency-hopping based protocol for communication of data, including an advertising event, which do not substantially conflict with monitored communication times of a wireless router. In certain implementations, aspects of the present disclosure have been shown to be beneficial when used in the context of a combo-endpoint device, such as an integrated chip, that is configured to communicate according to either a frequency-hopping based protocol and a direct or parallel-sequence spread spectrum based protocol at a given time. In some embodiments, the combo-endpoint device includes data-communication scheduling circuitry to monitor and store communications patterns of a ZigBee (ZB) router with its associated ZB devices. Using the monitored communication patterns, the combo-endpoint device schedules connection periods for wireless communication data between the combo-endpoint device and a Bluetooth Light Energy (BLE) communication device and time intervals for an advertising event which avoid conflict with the communication patterns of the ZB router. While not necessarily so limited, various aspects may be appreciated through the following discussion of non-limiting examples which use exemplary contexts.

Accordingly, in the following description various specific details are set forth to describe specific examples presented herein. It should be apparent to one skilled in the art, however, that one or more other examples and/or variations of these examples may be practiced without all the specific details given below. In other instances, well known features have not been described in detail so as not to obscure the description of the examples herein. For ease of illustration, the same reference numerals may be used in different diagrams to refer to the same elements or additional instances of the same element. Also, although aspects and features may in some cases be described in individual figures, it will be appreciated that features from one figure or embodiment can be combined with features of another figure or embodiment even though the combination is not explicitly shown or explicitly described as a combination.

Various embodiments in accordance with the present disclosure include and/or relate to a combo-endpoint device that is capable of communicating wirelessly with either a wireless router or a wireless communication device at a given time. The wireless router and wireless communication device communicate according to two different communication protocols. In specific-embodiments, the two different communication protocols include a frequency-hopping (FH)-based protocol and a spread spectrum (SS)-based protocol. As a specific example, the wireless router is a ZB router and the wireless communication device is a BLE communication device, sometimes referred to as a "BLE link." ZB is standardized using IEEE 802.15 and BLE. Further, ZB operates at 868MHz, 915 MHz and 2.14MHz frequencies and consume bandwidths up to 0.3MHz, 0.6MHz, and 2MHz, depending upon the specific network. BLE operates at 2.4GHz frequency and consumes bandwidths, *e.g*., 1 MHz and/or 2 MHz.

The combo-endpoint device can communicate across two different networks. The different networks operate according to different communication protocols. The combo-endpoint device is capable of data communication over the two different networks and includes one antenna and radio-communication circuitry. For example, the combo-endpoint device is a single combo-integrated chip that includes radio-communication circuitry and a single antenna configured to communicate across both networks. As a specific embodiment, a ZB-BLE combination chip communication across a ZB network via communication with a ZB router and communication across a BLE network via communication with multiple BLE communication devices, i.e., BLE links. In other embodiments, the combo-endpoint device includes one antenna that two different (or shared) radio-communication circuitry share. For example, two separate integrated chips share a single antenna that is connected to the respective integrated chip responsive to a communication time window. Alternatively, each radio-communication circuitry is provided with its own antenna, but the combo-endpoint device can communicate according to one protocol at a time (*e.g.,* are separately activated).

A combo-endpoint device is used to communicate with both networks while reducing power consumption as much as possible. For example, the combo-endpoint device often runs at a very low duty cycle to reduce its active time, especially at the radio-active time. The combo-endpoint device communicates with one of the networks at a given time due to interference between the signals in the two networks (*e.g*., based on the different protocols) and/or within the communication circuitry of the endpoint-device, due to shared circuitry and/or resources by the communication circuitry and/or other reasons. Interference can be particularly problematic if one or both protocols use data communications that are temporally aligned to begin at a given instant. For example, Bluetooth/BLE operates on a time window allocation scheme. Bluetooth networks operate using a time-division multiplexing scheme to arrange transmissions between a master and its slaves. Data is transmitted in the time windows, with the master typically transmitting data during odd-number time windows. The start and end of the time windows are determined by the master device, and each slave device is synchronized with the same. A combo-endpoint device configured to communicate over a Bluetooth network and a ZG network may miss a time window for transmitting over the Bluetooth network in order to transmit data over the ZB network.

The two protocols, in various embodiments, include two different protocols that are or at one point were standardized on the IEEE 802.15. For example, the SS-based protocol in various embodiments is based on IEEE 802.15.4. Several technologies such as ZigBee (ZB), 6lowPAN and Thread are built upon the IEEE 802.15.4, which have technical advantage to form and manage ultra-low power devices in low power networks. The FH-based protocol is, in various embodiments, a FH spread spectrum (FHSS)-based protocol, such as BLE. In a ZB network or other WiFi network, more than 65,000 nodes can be connected together and can exist for a range of up to 10-100 meters. A BLE network can have a number of nodes connected together and can exist for a range of up to 10 meters.

As a specific example, a BLE communication device is sending a message to the combo-endpoint device according to an agreed schedule, but the combo-endpoint device is still sending/receiving a message to/from the ZB router. These conflicts lead to extra energy consumption of the combo-endpoint device due to extra traffic activity composed of packet retries sequences, and have an impact to both the ZB network and the BLE device in terms of extra traffic activity and latency. Embodiments in accordance with the present disclosure include monitoring communication patterns between the ZB router and the combo-endpoint device, and optionally, between the ZB router and other associated ZB devices (*e.g.*, ZB sensors other/or ZB routers) to schedule and reschedule BLE connection periods according to time windows and selected frequencies. The BLE connection periods are used to wirelessly communicate data between the BLE communication device and the combo-endpoint device that mitigates conflict of communication of the combo-endpoint device with the BLE network and the ZB network. For example, the combo-endpoint device establishes time windows for the BLE protocol which do not substantially conflict (*e.g.,* do not, do not for periods of time, mitigates, or avoid conflict) with communication times of the ZB router and which includes time intervals for an advertising event.

During an advertising event, the combo-endpoint device or another wireless communication device that is not paired or bonded to the combo-endpoint device broadcast data packets to devices around it. The receiving device (which includes the other wireless communication device or the combo-endpoint device) acts on the data packet that is broadcast by pairing to the respective device and/or exchanging additional messages to set up a new connection. In various embodiments, a FH-based protocol uses particular communication channels for advertising events. For example, three communication channels are used and during an advertising event, data packets are transmitted on each of the three channels one after the other. A device scanning for packets or beacons (*e.g.,* the receiving device) listens to these predefined channels during time intervals established for advertising events.

Various embodiments include methods and devices involving a combo-endpoint device. The combo-endpoint device includes one or more integrated chips configured to communicate with devices according to two different communication protocols. For example, the combo-endpoint device schedules and reschedules a BLE time window, window offset, and time intervals for an advertising event, using known regular communication patterns (e.g., ZB communication schedules between the combo-endpoint device and the ZB router) to avoid conflicts between the BLE and ZB links and the combo-endpoint device. In various embodiments, the combo-endpoint device monitors communication patterns of wireless data communication between a wireless router and radio-communication circuitry of the combo-endpoint device and, in some embodiments, additionally monitors communication patterns between the wireless router and other wireless devices. Data indicative of communication times of the wireless router is stored based on the monitored communication patterns. Further, an FH-based protocol (*e.g.,* BLE communication protocol) is configured by defining connection periods according to time windows and selected frequencies for wireless communication of data between the wireless communication device and the radio-communication circuitry and by establishing the time windows and time intervals for an advertising event to not substantially conflict with the communication times of the wireless router. To not substantially conflict (*e.g.,* to avoid, mitigate, and/or not conflict) with the communication times, in specific embodiments, the time windows are established prior to the communication times of the wireless router and the time intervals for the advertising event are established after the communication times of the wireless router.

The time windows for the FH-based protocol can be a multiple or a division of the time windows for the wireless router communication times. The wireless router communicates can be according to the SS-based protocol. The FH-based protocol is configured to occur at time windows that are a multiple or division of the SS-based protocol. In other embodiments, the FH-based protocol uses a time window that is not a multiple of the SS-based protocol. In such embodiments, a pattern between the two communications is identified and used to identify time windows and window offsets. In either embodiments, the FH-based protocol is configured by determining the time windows and window offsets between the time windows that mitigates or does not conflict with the communication times (*e.g.,* time windows) of the wireless router.

In other specific embodiments, the combo-endpoints device communicates with multiple wireless communication devices. For example, the advertising event is used to connect with another (*e.g.,* an additional) wireless communication device. Time windows for communication for another wireless communication device are established prior to existing communications with wireless communication devices. Said differently, a FH-based protocol configured for a new wireless communication device is defined by establishing time windows and window offsets prior to all previously scheduled communications.

As previously discussed, the wireless router can a ZB router and the wireless communication device can be a BLE device. In typical wireless-sensor network (WSN) and Internet of Things (IoT) applications, an associated sensor in a ZB network usually wakes up periodically (e.g. once every several seconds or minutes), and then sends a message to report the sensed information (e.g. the temperature at the moment) via its ZB router to the network, so that the network knows the measured information. The sensor may retry sending the message for a few times, if it did not receive an acknowledgement from the ZB router to confirm that the message has been received successfully. After the reporting, which may take a few milliseconds, it falls into sleep to save energy until the next wakeup moment. For a new sensor or a sensor that has lost its association to the ZB network, the sensor starts an association procedure to find the ZB router to join the network via a set of message communications, before the sensor can start the regular reporting-sleep-reporting cycle behavior. Usually the ZB routers are statically mounted in a place with power-line energy supply. ZB sensors are often statically mounted and run in a stable network topology and regularly communicate with an associated router.

A BLE device pair, *e.g.,* a master device and slave device, communicate in a similar way. A connection via BLE advertising procedures is set up, and then the devices communicate periodically following a connection period. If a BLE device has completed communication in a connection period, it may fall into sleep mode for many seconds until the beginning of the next period. The BLE device pair can negotiate the connection period length and starting time (also called a connection window offset in this document) in the connection setup procedure. The BLE device pair may also reset the connection period and starting time by sending special messages (*e.g.*, multiple messages) when the pair are active in a connection window.

In some specific embodiments, the combo-endpoint device includes radio-communication circuitry and data-communication scheduling circuitry. The radio-communication circuitry communicates wirelessly with two different networks according to two communication protocols. To avoid various interferences, at any particular time, the radio-communication circuitry communicates with one, but not the other, of the networks. For example, the radio-communication circuitry communicates with a wireless router according to a SS based protocol defined by the wireless router. The radio-communication circuitry further communicates with a wireless communication device according to a FH-based protocol. The FH-based protocol defines connection periods according to time windows and selected frequencies.

As the radio-communication circuitry communicates with one network at a time to mitigate interference, the data-communication scheduling circuitry is used to mitigate conflicts between time windows of wireless data communications, including advertising events to connect with new wireless communication devices, by the radio-communication circuitry with each of the two networks. The data-communication scheduling circuitry monitors communication patterns of wireless data communications between the wireless router and the radio-communication circuitry. Additionally, in some embodiments, the data-communication scheduling circuitry monitors communication patterns of wireless data communications between the wireless router and other wireless devices. A wireless device refers to or includes a device associated with the wireless router and configured to communicate with the wireless router at scheduled times (*e.g.,* a ZB device such as a ZB sensor or another ZB router in communication with the wireless router). Such communication patterns monitored include the channel number, the communication-sleep period, and message block length, among other patterns. The data-communication scheduling circuitry stores the communication patterns, including data indicative of communication times of the wireless router, based on the monitoring. In some embodiments, the data-communication scheduling circuitry also monitors and stores communication patterns of various connected wireless communication devices (that communicate according to the FH-based protocol).

The data-communication scheduling circuitry uses the stored communication patterns to schedule new communication activity and advertising events to avoid conflicts between data communicated to the two networks. For example, when scheduling a new BLE link, the data-communication scheduling circuitry configures an FH-based protocol by establishing time windows which do not substantially conflict with the communication times of the wireless router. In specific embodiments, the data-communication scheduling circuitry reads channels used for wireless data communication with the wireless router and blocks such channels in a channel hopping list for the FH-based protocol. The channel hopping list is specific to the new BLE link and is stored on the link master side. The data-communication scheduling circuitry uses the stored communication patterns to determine the connection periods, including time windows and window offsets that mitigate conflict with the communication times of the wireless router with the combo-endpoint device. Further, the data-communication scheduling circuitry uses the stored communication patterns to determine time intervals for one or more advertising events to identify and connect with additional wireless communication devices which do not substantially conflict with the wireless router communication times.

In specific embodiments, the time windows are established prior to (*e.g.,* just before) the communication times of the wireless router. For example, the data-communication scheduling circuitry schedules the time windows as the same or a multiplier of the wireless router communication times and schedules window offsets as a period time prior to the communication and based on the length of time of the time windows. If the time window is less than the wireless router communication pattern, the time windows are established as a division of the wireless router communication pattern. In other embodiments, the connection period is defined as a division of communication times of the wireless router.

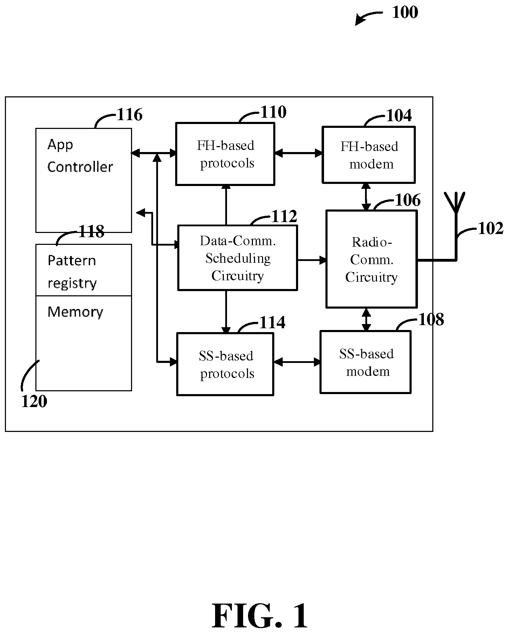

Turning now to the figures, FIG. 1 illustrates an example apparatus, in accordance with the present disclosure. The apparatus, in various embodiments, includes a combo-endpoint device 100. A combo-endpoint device 100 is configured to communicate with two different networks and according to two different communication protocols. To avoid interference of communications with the two different networks, the combo-endpoint device 100 communicates with one network at a given time. In various embodiments, the different communication protocols include an SS-based protocol and a FH-based protocol. In specific examples, the networks include a ZB network and a BLE network, although embodiments are not so limited and include various different networks although embodiments are not so limited and include various different networks such as Wireless Personal Area Network (WPAN) networks, a 6lowPAN network, and/or a Thread network.

As illustrated by FIG. 1, the combo-endpoint device includes radio-communication circuitry 106 and data-communication scheduling circuitry 112. The radio-communication circuitry 106 communicates wirelessly with a wireless router according to an SS-based communication protocol defined by the wireless router. The radio-communication circuitry 106 further communicates with a wireless communication device according to an FH-based protocol. The FH-based protocol defines connection periods according to time windows and selected frequencies. Further, the FH-based protocol defines time intervals (*e.g.,* time windows) for an advertising event. During time intervals for an advertising event, in some embodiments, the combo-endpoint device 100 receives data packets from another (*e.g*., additional or new) wireless communication device and establishes a connection with the other wireless communication device. The radio-communication circuitry 106 uses the FH-based modem 104 for communicating data according to an FH-based communication protocol and uses the SS-based modem (*e.g*., 802.15.4 modem) 108 for communicating data according to the SS-based protocol.

During an advertising event, the combo-endpoint device 100 or another wireless communication device that is not paired or bonded to the combo-endpoint device 100 device broadcast data packets to devices around it. The receiving device (which includes the other wireless communication device or the combo-endpoint device 100) acts on the data packet that is broadcast by pairing to the respective device and/or exchanging additional messages to set up a new connection. In various embodiments, a FH-based protocol uses particular communication channels for advertising events. For example, three communication channels are used and during an advertising event, data packets are transmitted on each of the three channels one after the other. A device scanning for packets or beacons (e.g., the receiving device) listens to these predefined channels during time intervals established for advertising events.

The combo-endpoint device 100 can communicate according to only one of the FH-based protocol or the SS-based protocol at a given time to prevent interference. In some specific embodiments, the combo-endpoint device 100 includes an integrated chip that is used to communicate according to different protocols, such as communicating data (*e.g.,* messages) in a BLE or ZB standard at a given time. For example, the integrated chip includes an application being executed by the application controller circuitry 116. The application includes a first application to communicate data via the SS-based protocol and a second application to communicate data via the FH-based protocol. In some embodiments, the application controller circuitry 116 transitions power modes (*e.g.,* to an active state from a sleep state) prior to time windows of either protocol by adjusting a sleep schedule based on the time windows of both protocols (*e.g.,* communications between the combo-endpoint device 100 and each of the wireless communication device and/or the wireless router). The integrated chip further includes the data-communication scheduling circuitry 112, the FH-based modem 104, the SS-based modem 108, antenna 102, and memory circuitry 120, among other circuit components as further described herein and as illustrated by FIG. 1.

The data-communication scheduling circuitry 112 is configured to activate communication of a particular protocol at different connection periods. At the start of a time window, the data-communication scheduling circuitry 112 can switch the radio-communication circuitry 106 and the requisite modem (*e.g.*, switching between the FH-based modem 104 and the SS-based modem 108) and related protocol (*e.g.,* the FH-based protocols circuitry 110 and/or the SS-based protocols circuitry 114). The combo-endpoint device 100 can communicate with the wireless router or the wireless communication device in the time window. Further, during time intervals for an advertising event, the combo-endpoint device 100 broadcasts data packets on communication channels associated with advertising events to devices. In other embodiments, the combo-endpoint device 100 listens to the respective communication channels associated with advertising events for broadcast data packets from another wireless communication device to which the combo-endpoint device 100 is not yet connected with. The device pair (*e.g.,* the other wireless communication device and the combo-endpoint device 100) act on the broadcast data packet by exchanging multiple (*e.g.,* additional) messages during the advertising event time interval to set up a new connection (*e.g*., pairing and/or bond to one another). The multiple messages in a specific embodiment include a set-procedure in which the respective device negotiate the time window and window offset.

The data-communication scheduling circuitry 112 schedules time windows and time intervals for an advertising event for the FH-based protocol which do not (substantially) conflict with time windows for the SS-based protocol. In various embodiments, the data-communication scheduling circuitry 112 monitors communication patterns between the radio-communication circuitry 106 and each of the wireless router and the wireless communication device. For example, the data-communication scheduling circuitry 112 monitors ZB communication patterns between the radio-communication circuitry 106 and the wireless router. Additionally, in some embodiments, the data-communication scheduling circuitry 112 monitors ZB communication patterns between the wireless router and other ZB devices (*e.g*., ZB sensors and other ZB routers). The ZB communication patterns can include the channel number, the communication sleep-period, and message block length. The communication patterns are stored by the data-communication scheduling circuitry 112 in the pattern registry 118 in memory circuitry 120 of the combo-endpoints. In various related embodiments, the data-communication scheduling circuitry 112 additionally monitors and stores communication patterns between the radio-communication circuitry 106 and one or more wireless communication devices in the pattern registry 118. For example, in some specific embodiments, the combo-endpoint device 100 is in wireless communication with a plurality of BLE links.

The data-communication scheduling circuitry 112 uses the stored communications patterns to schedule new communication activity to avoid conflicts between communications across the two networks. For example, when connecting with a BLE device, the data-communication scheduling circuitry 112 configures a FH-based protocol by defining connection periods according to time windows and selected frequencies for wireless communication of data between the wireless communication device and the radio-communication circuitry 106. Further, the data-communication scheduling circuitry 112 establishes the time windows and time intervals for an advertising event to not substantially conflict (*e.g*., avoid, mitigate, or do not conflict) with the communication times of the wireless router, as previously established. For example, the data-communication scheduling circuitry 112 schedules the times windows prior to the communication times of the wireless router and schedules the time intervals for the advertising event after the communication times of the wireless router. The monitored communication patterns of the wireless router, in some embodiments, include wireless data communications between the wireless router and its associated devices, including the combo-endpoint device 100. The communication patterns of the wireless router are used to reduce collision of the combo-endpoint device 100 (*e.g.,* a device with a combo-communication integrated chip) communication. For example, the monitored communication patterns are used to avoid collision between a combo-endpoint device message (from the combo-endpoint device 100 to the wireless router) and other messages of the wireless router to/from other wireless devices. The combo-endpoint device message to the wireless router may be provided after a combo-endpoint device message to a wireless communication device, such as to complete a BLE-router communication with low latency (delivery time) and low power consumption (less total active time).

In specific embodiments, when configuring a new wireless communication device link (*e.g.,* BLE link), the data-communication scheduling circuitry 112 reads the channels used by the monitored communication patterns of the wireless router (*e.g.,* ZB communications patterns) within the pattern registry 118. The data-communication scheduling circuitry 112 blocks these channels in a channel hopping list for the FH-based protocol. For example, the data-communication scheduling circuitry 112 provides notice to the FH-based protocols circuitry 110 to block these channels in their channel hopping list. In some embodiments, this is implemented via BLE channel Hop Sequence Adaption by setting these channels as unused Channels for this BLE link on the link master side. If the link master is a smart phone, the data-communication scheduling circuitry 112 provides notice to the application controller circuitry 116 to send a list of the wireless router-used channels to the smart phone in FH-based (*e.g*., BLE) communication and to use such Adaptive Frequency Hopping. Thereby, the data-communication scheduling circuitry 112 and the radio-communication circuitry 106 wirelessly communicate the channel hopping list to the wireless communication device for the FH-based protocol. The channel hopping list includes, in some embodiments, allocated frequencies and times for frequency hopping and/or channels (*e.g.*, times and/or frequencies) that are blocked (*e.g.,* not to be used).

As previously discussed, the data-communication scheduling circuitry 112 uses the stored communication patterns to determine a connection period, including time windows and window offsets, for communication of data between the radio-communication circuitry 106 and the wireless communication device. If the FH-based application allows (*e.g.,* the connection period is a multiple), the connection period is set as a multiple of the SS-based communication pattern, which may reduce the total number of the combo-endpoint device 100 wake-ups and saves energy that is used in the wake-up process. In other embodiments, the connection period is set as a division of the SS-based communication patterns in response to the length of time for messaging (*e.g*., the time window) for the FH-based communication being less than the SS-based communication pattern. Further, the window offset is determined as a period of time before the communication times of the wireless router. For example, the window offset is set with room just before the communication times of the wireless router to mitigate conflict.

While various embodiments can include the window offsets as a period of time after communications times of the wireless router, in such embodiments, the window offsets are larger than if placed before the communication times in the event that the wireless router uses ZB communication. For example, ZB communications use carrier sense, multiple access/collision avoidance (CSMA). CSMA can add a random back-off overhead in addition to the ZB packet duration for each ZB communication. This overhead can be up to 20 milliseconds (ms). To avoid using the maximum overhead (*e.g.*, 20 ms) to minimize collision, the window offsets can be placed prior to the communication times of the wireless router. Surprisingly, in connection with the instant disclosure, theses aspects reduce the above maximum overhead to an average of 2 ms while avoiding collision. The BLE time windows, which are fixed messages, can be placed prior to the time windows of the wireless router and with a window offset prior to the time windows of the wireless router. The ZB communications can be regular messages with a random back-off overhead (*e.g*., ZB with CSMA). The advertising events for BLE communication can be random events and/or otherwise not regular events, and are placed after the ZB communications. The scheduling by the data-communication scheduling circuitry 112 is used to reduce a total active time of the combo-endpoint device 100.

The combo-endpoint device 100 can have active links to a plurality of wireless communication devices. This is sometimes referred to as "wireless communication device links" or "BLE links." The data-communication scheduling circuitry 112 monitors communication patterns (*e.g.*, connection intervals) of the active links and uses a collision-free condition (as further discussed herein) to find the time windows and window offsets for each of the plurality of wireless communication devices which do not substantially conflict with the communication of the wireless router. For example, the data-communication scheduling circuitry 112 configures the FH-based protocol for communication between each of the plurality of wireless communication devices and the radio-communication circuitry 106 by providing time windows and/or window offsets for the FH-based protocol for each of the wireless communication devices and which do not substantially conflict with the communication times of the wireless router.

In specific embodiments, when establishing communication with another wireless communication device, the data-communication scheduling circuitry 112 configures the FH-based protocol for communication between the other wireless communication device and the radio-communication circuitry 106 by providing time windows and/or window offsets for the FH-based protocol for the other wireless communication device which is prior to the time windows for the wireless communication device (*e.g*., already-connected wireless communication devices).

The data-communication scheduling circuitry 112 can monitor the communication patterns with the active links and identifies if a link is removed. The data-communication scheduling circuitry 112 reschedules the remaining active links by adjusting the times windows (*e.g*., revised time windows) for the FH-based protocols to be prior to the communication times of the wireless router. For instance, the adjustment includes shifting time windows of the remaining wireless communication devices to be prior to (*e.g.,* just before) the communication times of the wireless router and in a sequential order via a connection update procedure.

In other embodiments, a connection with the wireless router is lost and a re-association procedure occurs. For example, the data-communication scheduling circuitry 112 identifies loss of connection between the combo-endpoint device 100 and the wireless router and uses the scheduled communication times of the wireless router to re-associate with the wireless router. The data-communication scheduling circuitry 112 establishes the connection times for the wireless router during the previously established times. During this process, the data-communication scheduling circuitry 112, in some embodiments, does not perform an advertising event during the next scheduled interval for an advertising event and may continue to not perform an advertising event until the re-association is complete.

The connection periods for communicating with the one or more wireless communication devices can be set by using a link layer connection update procedure. For example, BLE time windows and window offsets are set using the BLE link layer Connection Update Procedure via a BLE data message with LL_CONNECTION_UPDATE_REQ PDU. This update is done when setting a new connection (after initial faster connection for exchange parameters and encryption keys), or updating current connection when new conflicts are detected. This update can be initiated by the combo-endpoint device 100 or by a BLE communication device.

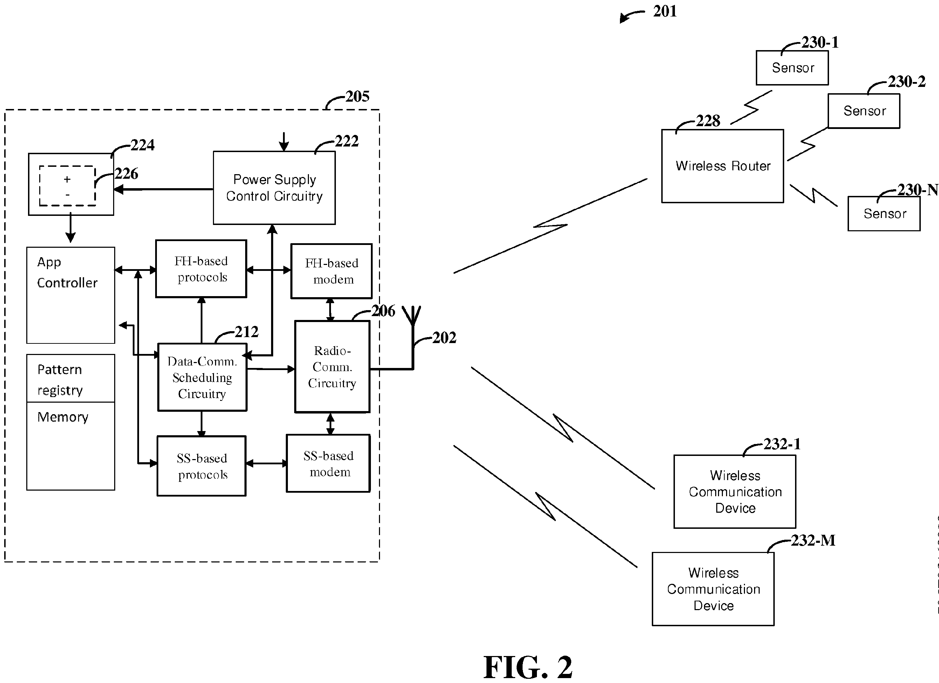

FIG. 2 is an apparatus-level diagram illustrating an example of a combo-endpoint device wirelessly communicating between each of a wireless router and a wireless communication device, in accordance with the present disclosure. As illustrated, the apparatus 201 includes a combo-endpoint device 205, a wireless router 228, and a wireless communication device 232-1.

The combo-endpoint device 205 includes the circuitry previously described by FIG. 1. In various embodiments, the combo-endpoint device 205 is an integrated chip with one set of radio-communication circuitry 206 and one antenna 202 configured to communicate according to two different communication protocols. The integrated chip includes data-communication scheduling circuitry 212 to schedule communications times between networks corresponding to the different communication protocols, such that the scheduled times for communication avoid conflict. The integrated chip is sometimes herein referred to as a "combo-communication integrated chip." And, the data-communication scheduling circuitry 212 schedules time intervals for an advertising event to enable connecting to additional wireless communication devices.

The combo-endpoint device 205 can further include a power source 224 and power control circuitry 222. The power source 224 provides power to the combo-endpoint device 205. For example, the power source 224 provides power to the application controller circuitry and/or the data-communication scheduling circuitry 212, in some embodiments, via power-supply pins 226. Example power sources include a battery, generator, solar power converter, or other circuitry configured to convert one form of energy to another. The power control circuitry 222 controls the connection of the power source 224 to the combo-endpoint device 205. The power source 224 can be internal or external to the combo-endpoint device 205 in various embodiments. In various embodiments, the data-communication scheduling circuitry 212 is in communication with the power control circuitry 222. Based on the monitored communication patterns and the time windows for the wireless communications (*e.g.,* the coordinated communications), the data-communication scheduling circuitry 212 controls the power control circuitry 222 to optimize the active mode and the current consumption.

As illustrated by FIG. 2, the combo-endpoint device 205 communicates across two different networks. The different networks operate according to different communication protocols. For example, the combo-endpoint device 205 communicates with a wireless router 228 according to an SS-based protocol and a wireless communication device 232-1 according to an FH-based protocol. The SS-based protocol, in specific embodiments, includes a direct or parallel-sequence SS-based protocol based on an IEEE 802.15.4 standard. The FH-based protocol includes a FH spread spectrum (FHSS)-based protocol. The data-communication scheduling circuitry 212 schedules and monitors communication patterns between the combo-endpoint device 205 and the two networks to mitigate collision of communicate times. For example, the data-communication scheduling circuitry 212 establishes coordinated wireless communication schedules for the radio-communication circuitry to communicate with both the wireless router 228 and the wireless communication device 232-1 and to advertise for connecting with other wireless communication devices 232-M.

In specific embodiments, the two networks include an IEEE 802.15.4 based network and a Bluetooth based network. For example, the two networks include a ZB network and a BLE network, although embodiments are not so limited.

The wireless router 228 can be a ZB router in a ZB network. Typically in ZB networks, one or more sensors 230-1, 230-2, 230-N (herein generally referred to as "ZB sensors 230" for ease of reference) wake-up periodically and send a message to the ZB router (*e.g*., wireless router 228) to report sensed information, such as temperature. If the ZB router does not send an acknowledgement (*e.g.*, ACK message) to the sensor to confirm receipt of the message, the sensor may retry sending for a few times. After reporting, the ZB sensors 230 transition from the awake mode to a sleep mode to save energy until the next communication period. For a new ZB sensor or a ZB sensor that has lost connection to the ZB network, the sensor starts an association procedure to find its ZB router to join the ZB network via set of messages before beginning the above-described sleep-report-sleep cycle behavior. Typically, ZB routers are statically mounted in place with power-line energy supply, while ZB sensors are statically mounted and run in a stable network topology and regularly communicate with the ZB router. In specific embodiments, the combo-endpoint device 205 is a ZB sensor. In other embodiments, the combo-endpoint device 205 is used to communicate with the ZB router to obtain data from the ZB sensors 230.

In related specific embodiments, the wireless communication device 232-1 is a BLE device. For example, the wireless communication device 232-1 and the combo-endpoint device 205 form a BLE device pair, *e.g.,* a master device and slave device. In some embodiments, the combo-endpoint device 205 is the master device and the wireless communication device 232-1 is the slave device. In other embodiments, the reverse is true, and the combo-endpoint device 205 is the slave device and the wireless communication device 232-1 is the master device. BLE device pairs communicate by first setting up a BLE connection via BLE advertising procedures and communicating periodically following the set-up connection. If a BLE device completes communication during a connection period, it falls asleep until the next connection period. The BLE device pair negotiate the time window and window offset in the set-up procedure. Further, the BLE device pair reset the time window and window offset by sending special messages when the pair are in an active time window.

The wireless communication device 232-1 can also include an integrated chip, such as combo-communication integrated chip. The combo-communication integrated chip includes another data-communication scheduling circuitry another radio-communication circuitry to communicate wirelessly with the radio-communication circuitry via the FH-based protocol and the other data-communication scheduling circuitry. The scheduler function is performed by the wireless communication device 232-1 to mitigate or avoid conflict and to minimize the active time of the combo-endpoint device 205. Besides the functions to optimize the connection period and window offset using the communication patterns of the combo-endpoint device 205, the scheduler function includes asking the combo-endpoint device 205 or other connected ZB/BLE devices to get the communication patterns of the combo-endpoint device 205.

In specific embodiments, the other data-communication scheduling circuitry monitor communication patterns of the other radio-communication circuitry and stores data indicative of communication times. Further, the other data-communication schedule circuitry configures the FH-based protocol for wireless communication between the wireless communication device 232-1 and the combo-endpoint device 205 by providing time windows for the FHSS-based protocol which do not substantially conflict with the communication times of the radio-communication circuitry.

The combo-endpoint device 205 can connect with one or more additional wireless communication devices 232-M. For example, to enable connecting with additional wireless communication devices, the data-communication scheduling circuitry 212 establishes time intervals after the communication times of the wireless router 228 for an advertising event. As previously described, during an advertising event, the combo-endpoint device 205 broadcasts to and/or listens for broadcast data packets from another wireless communication device 232-M. In response to the broadcast data packet, the combo-endpoint device 205 and the other wireless communication device 232-M set up a new connection, such as by exchanging additional data to negotiate time windows and window offsets.

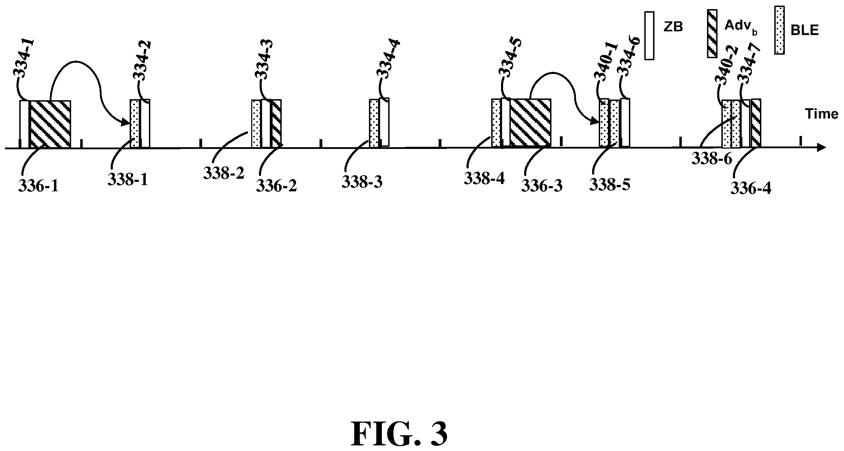

FIG. 3 is an example configuration of wireless communications of a combo-endpoint device between each of a wireless router and a wireless communication device according to two communication protocols, in accordance with the present disclosure. As illustrated by FIG. 3, in some embodiments, the FH-based application uses a connection period which is the same or a multiple of the communication patterns (*e.g.,* the time windows) of the wireless router. However, embodiments are not so limited and the connection period may not be a multiple and/or may be a division of the communication patterns of the wireless router, in various embodiments.

The data-communication scheduling circuitry monitors the communication patterns of the wireless router. FIG. 3 illustrates an example communication patterns of the wireless router which includes multiple communication times 334-1, 334-2, 334-3, 334-4, 334-5, 334-6, 334-7 that have respective common lengths (*e.g*., time window) and common times between (*e.g.*, window offsets). The data-communication scheduling circuitry establishes time intervals for an advertising event 336-1 after the communication time 334-1 of the wireless router. During the interval, the combo-endpoint device, in some embodiments, connects with the wireless communication device.

When connecting with the wireless communication device, the data-communication scheduling circuitry establishes time windows 338-1, 338-2, 338-3, 338-4, 338-5, 338-6 for the FH-based protocol for communication with the wireless communication device that are prior (*e.g.,* just before) to the (remaining) communication times 334-2, 334-3, 334-4, 334-5, 334-6, 334-7 of the wireless router. In some specific embodiments, the time windows are established by scheduling (or rescheduling) the time window as the same, a multiple, a division, and/or other pattern of the communication times of the wireless router, and scheduling (or rescheduling) the window offset before the communication times of the wireless router with room for the reporting message block length of the message for the wireless communication device.

The data-communication scheduling circuitry establishes time intervals for the advertising event 336-2, 336-3, 336-4 that are after the (remaining) communication times 334-3, 334-5, and 334-7 of the wireless router. The data-communication scheduling circuitry places an advertising event, such as a BLE advertising event, after communication time for the wireless router is completed, to enable connecting to other wireless communication devices. Because a wireless router message may be re-sent if its acknowledgement is not received, which takes longer time than expected, the advertising event may start later. However, it is not an issue, because advertising can be a bit random. An advertising event may have several follow-up message exchanges to set a new connection. This non-regular event has little impact to the wireless router communication times, when the wireless router communication is in low event rate and therefore there is room after a wireless router communication.

As illustrated, the combo-endpoint device is in communication with multiple wireless communication devices, in various embodiments. For example, during an advertising event 336-1, a connection is made with a first wireless communication device and during another advertising event 336-3, a connection is made with a second wireless communication device. If there are already time windows scheduled for communication with a wireless communication device, time windows for other wireless communication devices are scheduled prior to the time windows for the wireless communication device.

As a particular example, during a particular advertising event 336-3, the combo-endpoint device establishes a connection with another wireless communication device. The data-communication scheduling circuitry configures a FH-based protocol for communications with the other wireless communication devices by establishing time windows 340-1, 340-2 for communications with the other wireless communication devices that are prior to the time windows 338-5, 338-6 for communication with the wireless communication device and the communications with the wireless router.

Although not illustrated by FIG. 3, in various embodiments, a connection with a wireless communication device is removed. The data-communication scheduling circuitry performs a function to clean the time windows for the removed wireless communication device. For example, the data-communication scheduling circuitry shifts the time windows for the remaining wireless communication devices that are currently before the removed connection device. Thereby, the remaining wireless communication devices have time windows that are sequentially scheduled, with no or mitigated gaps, before the communication times of the wireless router.

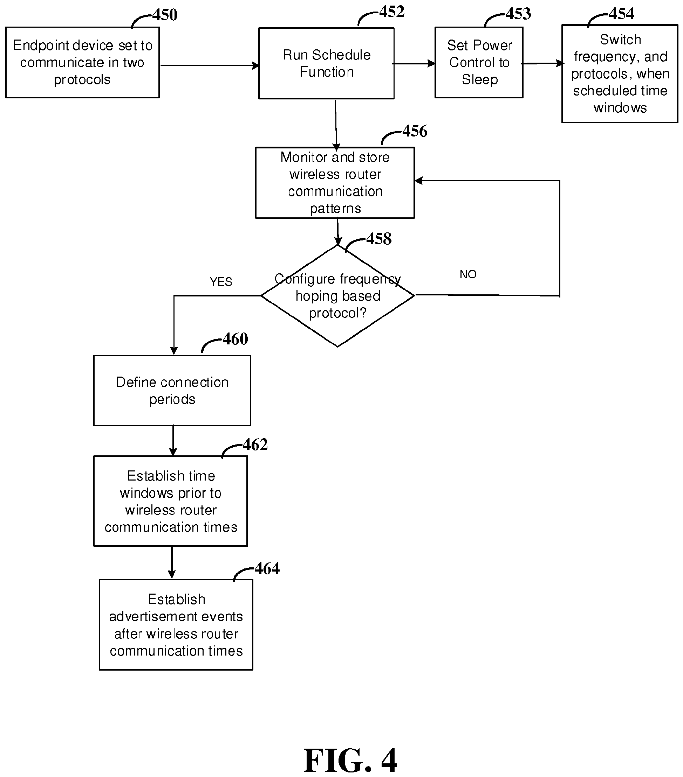

FIG. 4 is a flow chart illustrating an exemplary set of activities and/or data flow for an apparatus of the type implemented in a manner consistent with FIG. 1 and FIG. 2, in accordance with the present disclosure. The data-communication scheduling circuitry, such as illustrated by FIG. 1 and FIG. 2, can be implemented using any number of different algorithms. FIG. 4 illustrates various specific and/or experimental embodiments characterizing different ways to implement such an algorithm.

An example process or algorithm performed by the data-communication scheduling circuitry includes monitoring communication patterns of wireless data communications between a wireless router and radio-communication circuitry of a combo-endpoint device, storing data indicative of communication times of the wireless router based on the monitored communication patterns, and configuring a FH-based protocol. For example, in specific embodiments, the data-communication scheduling circuitry performs an algorithm to configure a FH-based protocol including defining connection periods according to time windows and selected frequencies for wireless communication of data between the wireless communication device and the radio-communication circuitry and establishing the time windows and time intervals for an advertising event to not substantially conflict with the communication times of the wireless router.

Another more specific process or algorithm includes monitoring communication patterns of wireless data communications between a ZB router and radio-communication circuitry of a combo-endpoint device and wireless data communications between the ZB router and other ZB devices (*e.g.,* ZB sensors and other ZB routers), storing data indicative of communication times of the ZB router, and establishing coordinated wireless communication schedules for the radio-communication circuitry to communicate with both the BLE device and the ZB router by: configuring a FHSS-based protocol for communication between the BLE device and the combo-endpoint device with selected time windows for the FHSS-based data communications, and providing the selected time windows at intervals prior to the communication times of the ZB router and providing time intervals for an advertising event after the communication times of the ZB router.

A more detailed experimental algorithm as illustrated by FIG. 4 would affect such communication by the data-communication scheduling circuitry performing a schedule function. For example, at 450, the combo-endpoint device is set to communicate in both a FH-based protocol and a SS-based protocol. In various embodiments, the communication is across two different networks, such as a BLE network and a ZB network.

At 452, the data-communication scheduling circuitry of the combo-endpoint device performs the schedule function. For example, at 456, the data-communication scheduling circuitry monitors and stores wireless router communication patterns. Wireless router communication patterns includes or refers to communications of data between the wireless router and its associated devices, including the combo-endpoint device, and, in some embodiments, other wireless devices (*e.g.,* ZB sensors and other ZB routers). The data-communication scheduling circuitry stores the communication patterns in a pattern registry in memory of the combo-endpoint device. In some specific embodiments, the data-communication scheduling circuitry provides a message to the application processor to retrace the wireless router network communication patterns from the wireless router. For example, the application processor provides a message to a ZB router to retrieve ZB network communication patterns.

In various specific embodiments, the data-communication scheduling circuitry further monitors and stores communication patterns of wireless communication devices. Communication patterns of wireless communication devices includes or refers to communication of data between the wireless communication devices and the combo-endpoint device according to the FH-based protocol. Example patterns of the communications include frequency/hopping pattern, time windows, window offsets, message block length, among other information.

At 458, the data-communication scheduling circuitry determines if an FH-based protocol is being configured and/or established. The determination in various embodiments includes identifying a connection with a new wireless communication device (e.g., a new link or BLE link). Alternatively and/or in addition, the determination includes identifying a collision between communication with the wireless router and stored (e.g., scheduled) communication with a wireless communication device. If no FH-based protocols are being configured, the data-communication scheduling circuitry continues to monitor and store communication patterns, at 456.

In response to determining a FH-based protocol is being configured, at 460, the data-communication scheduling circuitry defines connections periods for communication between the wireless communication device and the radio-communication circuitry of the combo-endpoint device. For example, the connection periods are defined according to time windows and selected frequencies. Further, at 462, the data-communication scheduling circuitry establishes the time windows to not substantially conflict with the wireless router communication patterns. And, at 464, the data-communication scheduling circuitry establishes time intervals for an advertising event that do not substantially conflict with the wireless router communication patterns. In some embodiments, the time windows are established prior to the wireless router communication times and the time intervals for the advertising event are established after the wireless router communication times.

In specific embodiments, the FH-based protocol is configured by determining the time windows and window offsets as a multiple or division of the communication patterns of the wireless router. The window offsets, in such embodiments, are determined as a period of time before the communication times of the wireless router. In other specific embodiments, the FH-based protocol is configured by establishing the time windows as the same as the communication patterns of the wireless router, with a window offset determined as a period of time before the communication times of the wireless router.

At 453, the data-communication schedule circuitry sets the power supply control circuitry of the combo-endpoint device to sleep for periods of time between time windows of both protocols. For example, the power supply control circuitry is set to sleep between time windows of the FH-based protocols and time windows of the SS-based protocols. Further, at 454, at the start of the time windows or time intervals for an advertising event, the data-communication scheduling circuitry switches the radio-communication circuitry and the requisite modem (e.g., switching between the FH-based modem and the SS-based modem) and related protocol (e.g., the FH-based protocols and/or the SS-based protocols). The applications can communicate with the wireless router or the wireless communication device in the time window.

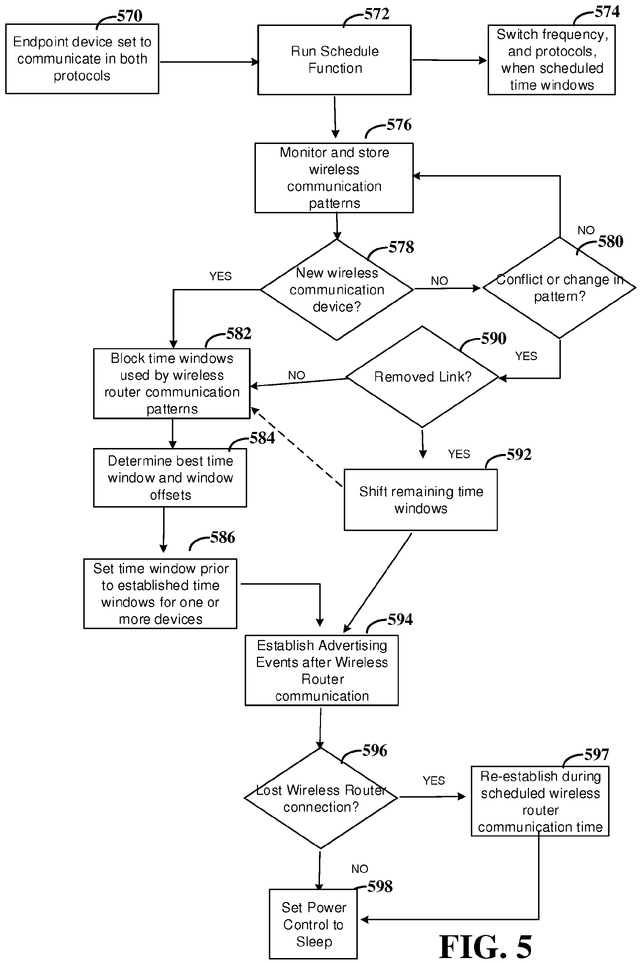

FIG.5 is a flow chart illustrating an exemplary set of activities and/or data flow for an apparatus of the type implemented in a manner consistent with FIG. 1 and FIG. 2, in accordance with the present disclosure. As previously described in connection with FIG. 4, the data-communication scheduling circuitry, such as illustrated by FIG. 1 and FIG. 2, can be implemented using any number of different algorithms. FIG. 4 illustrates various specific and/or experimental embodiments characterizing different ways to implement such an algorithm.

As previously discussed, an example process or algorithm performed by the data-communication scheduling circuitry includes monitoring communication patterns of wireless data communications between a wireless router and radio-communication circuitry of a combo-endpoint device and wireless data communications between the wireless router and other wireless devices (*e.g.,* ZB sensors and other ZB routers), storing data indicative of communication times of the wireless router based on the monitored communication patterns, and configuring a FH-based protocol including time windows and time intervals for an advertising event which do not (substantially) conflict with the communication times of the wireless router.

A more detailed experimental algorithm as illustrated by FIG. 5 would affect such communication by the data-communication scheduling circuitry determining if a conflict exists or a change in a communication pattern occurred between the combo-endpoint device and one or more of the wireless router or wireless communication device. Other detailed experimental and/or more-specific algorithms as illustrated by FIG. 5 affect such communication by the data-communication scheduling circuitry by determining if a wireless communication device link has been removed. If a link has been removed, the data-communication scheduling circuitry shifts the time windows for the remaining wireless communication devices that are currently before the removed connection (*e.g.*, resulting in revised time windows). Thereby, the remaining wireless communication devices have time windows (*e.g*., revised time windows) that are sequentially scheduled, with no or mitigated gaps, before the communication times of the wireless router.

Another more detailed experimental algorithm is illustrated by FIG. 5 would affect such communication by the data-communication scheduling circuitry performing a schedule function. For example, at 570, the combo-endpoint device is set to communicate in both a FH-based protocol and a SS-based protocol. In various embodiments, the communication is across two different networks, such as a BLE network and a ZB network.

At 572, the data-communication scheduling circuitry of the combo-endpoint device performs the schedule function. For example, at 576, the data-communication scheduling circuitry monitors and stores wireless router communication patterns. The data-communication scheduling circuitry stores the communication patterns in a pattern registry in memory of the combo-endpoint device. In some specific embodiments, the data-communication scheduling circuitry provides a message to the application processor to retrace the wireless router network communication patterns from the wireless router. For example, the application processor provides a message to a ZB router to retrieve ZB network communication patterns. In various specific embodiments, the data-communication scheduling circuitry further monitors and stores communication patterns of wireless communication devices.

At 578, the data-communication scheduling circuitry determines if a connection with a new wireless communication device (e.g., a new link or BLE link) is or is being established. If a new connection is not being established, at 580, the data-communication scheduling circuitry determines if a conflict between communication with the wireless router and stored (e.g., scheduled) communication with a wireless communication device and/or if a change in a communication pattern has occurred. For example, in some embodiments, the wireless router changes a communication pattern or the wireless communication device begins negotiations to change communication patterns (as previously discussed). If no conflicts or changes to data communication patterns are identified, the data-communication scheduling circuitry continues to monitor and store communication patterns, at 576.

Optionally, in various embodiments, in response to determining a conflict or change in a communication pattern has occurred (at 580), the data-communication scheduling circuitry, at 590, determines if a link to one of the wireless communication devices has been removed. In response to no removal of a link, at 582, the data-communication scheduling circuitry blocks time windows used by the wireless router communication patterns (as discussed further herein). In response to identifying a removed link, at 592, the data-communication scheduling circuitry shifts time windows for any wireless communication device that is scheduled earlier than the time windows of the removed wireless communication device and, at 594, establishes time intervals for an advertising event that are after the communication times of the wireless router (*e.g.,* resulting in revised time windows and time intervals for the advertising event). In various embodiments, a conflict can occur (*e.g.,* a collision) due to the shift of the time windows at 592. In such embodiments (as illustrated by the dashed arrow), the data-communication scheduling circuitry blocks time windows used by the wireless router communication patterns to resolve the conflict at 582.

In some embodiments, in response to determining no new wireless communication device connection is being established (at 578) and no conflict or change in a communication pattern (at 580), the data-communication scheduling circuitry determines if a link has been removed and/or shifts remaining time windows (as further described in connection with 590 and 592).

In response to determining a new connection to a wireless communication device is being established, or a conflict and/or change in communication pattern has occurred, at 582, the data-communication scheduling circuitry reads channels used for wireless data communication with the wireless router and blocks such channels in a channel hopping list for the FH-based protocol. The channel hopping list is specific to the particular wireless communication device link and is stored on the link master side. In some embodiments, blocking the channels includes updating an existing channel hopping list. For example, if the wireless router changes the communication patterns, existing communication patterns for wireless communication devices are re-scheduled by updating the channel hopping list and re-negotiating time windows and window offsets.

Further, at 584, the data-communication scheduling circuitry defines connection periods for communication between the wireless communication device and the radio-communication circuitry of the combo-endpoint device. For example, the connection periods are defined according to times windows (*e.g*., as revised or new) and selected frequencies. The data-communication scheduling circuitry establishes the time windows to not (substantially) conflict with the wireless router communication patterns by setting the intervals prior to the communication times of the wireless router. The window offset, in such embodiments, are determined by the data-communication scheduling circuitry as a period of time prior to the communication times of the wireless router.

At block 586, the data-communication scheduling circuitry sets the time windows and window offsets for the FH-based protocol prior to communication times of the wireless router. In various embodiments, the combo-endpoint device is in communication with a plurality of wireless communication devices. If there are other wireless communication devices already connected with the combo-endpoint device, the data-communication scheduling circuitry sets the times windows prior to the earliest-in-time time window of the other wireless communication devices. At 594, the data-communication scheduling circuitry establishes time intervals for an advertising event that are after the communication times of the wireless router.

In various embodiments, at 596, the data-communication scheduling circuitry determines if a connection to the wireless router has been lost. If the connection has not been lost, the process is completed by the data-communication schedule circuitry setting the power supply control circuitry of the combo-endpoint device to sleep for periods of times between time windows of both protocols, at 598. If the connection has been lost, at 597, a re-association procedure is started during the next scheduled wireless router communication time. Further, during the re-association procedure, the data-communication scheduling circuitry keeps the wireless router communication times at the same communication times as previously scheduled and does not allow for an advertising event until the re-association is completed.

At 574, at the start of the time windows, the data-communication scheduling circuitry switches the radio-communication circuitry and the requisite modem (e.g., switching between the FH-based modem and the SS-based modem) and related protocol (e.g., the FH-based protocols and/or the SS-based protocols). The applications can communicate with the wireless router or the wireless communication device in the time window.

The connection periods for communicating with the one or more wireless communication devices are set by using a link layer connection update procedure. For example, BLE time windows and window offsets are set using the BLE link layer Connection Update Procedure via a BLE data message with LL_CONNECTION_UPDATE_REQ PDU. This update is done when setting a new connection (after initial faster connection for exchange parameters and encryption keys), or updating a current connection when new conflicts are detected. This update can be initiated by the combo-endpoint device or by the BLE smart phone.

In various embodiments, the combo-endpoint device has active links to a plurality of wireless communication devices. One or more of the plurality of wireless communication devices operate according to a FH-based protocol (*e.g.,* an application) that does not allow for time windows that are the same, multiples of, or divisions of the communication times of the wireless router. For example, the message length may correspond to a value that is not a multiple of or a division of a time window of the communication times of the wireless router. For the wireless communicate device that cannot communicate as the same, multiple of, or division of the wireless router communication times, the data-communication scheduling circuitry schedules times windows for such wireless communication devices using a collision free condition. In such embodiments, the remaining wireless communication devices that do allow for communication as the same, multiple of, or division of the wireless router communication times, the data-communication scheduling circuitry schedules the respective time windows as previously described herein prior to the wireless router communication times with subsequently scheduled time windows being established prior to the previously established time windows (in a sequential order).

In such embodiments, the data-communication scheduling circuitry determines the time windows and window offsets between time windows by identifying a pattern between the monitored communication patterns of the wireless router and time windows for the wireless communication between the wireless communication device and the radio-communication circuitry. The pattern is identified based on a common multiple period with a cycle of at least two time windows of the wireless communication between the wireless communication device and the radio-communication circuitry and a cycle of at least two communication times of the wireless router. As a specific example, the pattern includes three communication repeats (e.g., three communication times/time windows) according to the SS-based protocol and two communication repeats according to the FH-based protocol *(e.g.,* three communications times of the ZB router and two time windows of communication with wireless BLE communication device within a period of time). A common multiple period includes or refers to a period of time in which at the least two communications (*e.g*., two time windows) of each protocol can occur. Once the pattern is identified, the data-communication scheduling circuitry identifies window offsets between time windows that results in the times windows not overlapping with the communication times of the wireless router using a collision free condition in the common multiple period. A common multiple period includes or refers to a period of time in which at the least two communications (*e.g.,* two time windows) of each protocol can occur. The above-described patterns includes three connection periods according to the SS-based protocol and two connection periods according to the FH-based protocol within a period of time. The data-communication scheduling circuitry identifies window offsets to avoid or mitigate conflict by examining a collision-free condition in the common multiple period.

The pattern of the two communications, in various embodiments, includes a common multiple period of the time windows with at least two cycles of each communication. A cycle of a communication (*e.g.,* Dz and Db) can include or refer to a length of time between the start of a time window for the respective protocol and the start of a subsequent time window for the respective protocol. Using an example of two minutes for a cycle of a ZB communication (Dz) and three minutes for a cycle of a BLE communication (Db), the common multiple period includes six minutes (two minutes multiplied by three minutes equals six minutes). The combo-endpoint device further identifies a window offset off_{b} to avoid or mitigate conflict by examining a collision-free condition in the common multiple period. An example collision-free condition is illustrated by:
Pattern repeats every Dz^{∗}Db/cdiv; with integers N, M, Dz=N^{∗}cdiv, Db=M^{∗}cdiv;
Collision if: j^{∗}Dz- Lb < offb +i^{∗}Db < j^{∗}Dz+Lz,
   with Lz < offb < Dz- Lb, i=[0,M], j=[0,N]
Collision-free condition:
   Find offb not in ranges [(j^{∗}Dz- i^{∗}Db) - Lb , (j^{∗}Dz- i^{∗}Db) + Lz], i=[0,M], j=[0,N]
If Dz= k^{∗}Db or k^{∗}Dz= Db, collision-free condition is Lz < offb < Dz- Lb,
wherein k is an integer, Dz is based on a length of time for a cycle of a ZB communication and Db is based on a length of time for a cycle of a BLE time communication. Further, Lz is based on a length of a ZB message taking into account the data packet, carrier sense, multiple access/collision avoidance (CSMA) back-off, and receiving ACK message. Lb is based on a length of a BLE message (*e.g*., data packet) and taking into account the response.

For the purposes of this document, the following terms and definitions apply: communication protocol includes or refers to descriptions of data message formats and rules used to exchange data between devices; FH-based protocol includes or refers to a protocol that transmits messages by switching a carrier among many frequency channels; FHSS-based protocol includes or refers to a protocol that transmits messages by switching a carrier among many frequency channels, using a sequence known by both transmitter and receiver, sometimes used by BLE networks or other Bluetooth networks; SS-based protocol includes or refers to a protocol in which the frequency of the transmitted signal is varied; DSS-based protocol includes or refers to a protocol that transmits messages according to a spread spectrum modulation technique in which the message signal is used to modulate a bit sequence referred to as "Pseudo Noise (PN) code" which consists of pulses that are of a shorter duration than the pulse duration of the message signal; PSS-based protocol includes or refers to a protocol that transmits messages according to a spread spectrum modulation technique in which the message signal is sent in parallel with a superposition of orthogonal sequences with M-ary modulation; wireless router includes or refers to circuitry configured to forward data packets between devices and/or networks and configured to communicate according to a communication protocol; ZB router includes or refers to circuitry configured to forward data packets between devices and/or networks and configured to communicate according to a DSS-based protocol; wireless communication device includes or refers to circuitry, including radio-communication circuitry, configured to communicate according to a FH-based protocol; BLE device includes or refers to circuitry, including radio-communication circuitry, configured to communicate according to a FHSS-based protocol; BLE device pair includes or refers to a master device and a slave device both of which communicate according to a BLE protocol that are paired or bonded together; wireless communication device link or BLE link refers to or includes active communication pairing between the combo-endpoint device and a wireless communication device or BLE device; Channel Hopping List refers to or includes allocated frequencies and times for frequency hopping and/or channels (e.g., times and/or frequencies) that are blocked (e.g., not to be used); combo-endpoint device refers to or includes circuitry configured to communicate with two different networks and according to two different communication protocols; combo-integrated chip refers to or includes a semiconductor wafer including common radio-communication circuitry and a single antenna configured to communicate with two different networks and according to two different communication protocols; communication patterns refers to or includes patterns of communication between at least two devices and/or across a network; connection periods refers to or includes a period of time for communication according to a particular communication protocol; time windows refers to or includes the length of time for connection period; window offsets refers to or includes a time offset of the time windows of the FH-based protocol that is before a communication time of the wireless router; frequencies refers to or includes an electromagnetic wave frequency; communication channel refers to or includes a bandwidth in Hertz or data rate in bits per second for communication of data; radio-communication circuitry refers to or includes communication circuitry configured to communicate wirelessly with devices; data-communication scheduling circuitry refers to or includes circuitry configured to establish coordinated communication schedules between two networks that communicate according to two different communication protocols.

A method as described for communicating between a combo-endpoint device, wireless router, and a wireless communication device includes monitoring communication patterns of wireless data communications between a wireless router and radio-communication circuitry of a combo-endpoint device, and storing data indicative of communication times of the wireless router based on the monitored communication patterns. The method further includes configuring a frequency-hopping based protocol by defining connection periods according to time windows and selected frequencies for wireless communication of data between the wireless communication device and the radio-communication circuitry, and by establishing the time windows and time intervals for an advertisement event which do not substantially conflict with the communication times of the wireless router.

The skilled artisan would recognize that various terminology as used in the Specification (including claims) connote a plain meaning in the art unless otherwise indicated. As examples, the Specification describes and/or illustrates aspects useful for implementing the claimed disclosure by way of various circuits or circuitry which may be illustrated as or using terms such as blocks, modules, device, system, unit, controller, registry, memory and/or other circuit-type depictions (e.g., reference numerals 112/212 and 106/206 of Figs. 1-2 depict a block/module as described herein). Such circuits or circuitry are used together with other elements to exemplify how certain embodiments may be carried out in the form or structures, steps, functions, operations, activities, etc. For example, in certain of the above-discussed embodiments, one or more modules are discrete logic circuits or programmable logic circuits configured and arranged for implementing these operations/activities, as may be carried out in the approaches shown in Figs. 4 and 5 In certain embodiments, such a programmable circuit is one or more computer circuits, including memory circuitry for storing and accessing a program to be executed as a set (or sets) of instructions (and/or to be used as configuration data to define how the programmable circuit is to perform), and an algorithm or process as described at p. 20-26 is used by the programmable circuit to perform the related steps, functions, operations, activities, etc. Depending on the application, the instructions (and/or configuration data) can be configured for implementation in logic circuitry, with the instructions (whether characterized in the form of object code, firmware or software) stored in and accessible from a memory (circuit). As another example, where the Specification may make reference to "a radio-communication circuitry" and "another radio-communication circuitry", etc., where the circuitry might be replaced with terms such as "circuit", "module" and others, the adjectives "a" and "another" are not used to connote any description of the structure or to provide any substantive meaning; rather, such adjectives are merely used for English-language antecedence to differentiate one such similarly-named structure from another similarly-named structure (e.g., "another circuitry configured to convert..." is interpreted as "circuitry configured to convert...").

Based upon the above discussion and illustrations, those skilled in the art will readily recognize that various modifications and changes may be made to the various embodiments without strictly following the exemplary embodiments and applications illustrated and described herein. For example, methods as exemplified in the Figures may involve steps carried out in various orders, with one or more aspects of the embodiments herein retained, or may involve fewer or more steps. For instance, the data-communications scheduling circuitry can schedule communication with one or more wireless communication devices as multiple, division or same as the communication patterns of the wireless router and schedule communication with an additional wireless device using the collision free condition. As another example, the data-communication scheduling circuitry can monitor communications and both adjust existing wireless communication device communications in response to a lost connection with one wireless communication device and re-establish a connection with the wireless router.

## Claims

1. A method for communicating between:
a combo-endpoint device configured to communicate according to either a frequency-hopping based protocol and a direct or parallel-sequence spread spectrum based protocol at a given time,
a wireless router, and
a wireless communication device,
the method comprising:
monitoring (456, 576) communication patterns of wireless data communications between a wireless router and radio-communication circuitry of the combo-endpoint device (205);
storing (456, 576) data indicative of communication times of the wireless router based on the monitored communication patterns;
configuring (458) a frequency-hopping (FH)-based protocol by defining (460) connection periods according to time windows and selected frequencies for wireless communication of data between the wireless communication device and the radio-communication circuitry, and by establishing (462) the time windows and time intervals for an advertisement event which do not conflict with the communication times of the wireless router;
monitoring wireless data communication between the wireless communication device and the radio-communication circuitry and configuring another FH-based protocol for communication between another wireless communication device and the radio-communication circuitry by providing time windows for the FH-based protocol for the other wireless communication device and which is prior to the time windows for the wireless communication device;
identifying a removed connection between the wireless communication device and the radio-communication circuitry; and
in response thereto, shifting the time windows for the other wireless communication device to a time prior to the communication times of the wireless router.

2. The method of claim 1, further including:
monitoring communication patterns of wireless data communications between the wireless router and other wireless devices; and
wherein configuring the FH-based protocol further includes determining (584) the time windows and window offsets between the time windows as a multiple of the communication times of the wireless data communication between the wireless router and the radio-communication circuitry and establishing the time windows prior to the communication times of the wireless router.

3. The method of claim 2, further including determining the window offsets as a period of time prior to the communication times of the wireless router.

4. The method of any preceding claim, wherein configuring the FH-based protocol further includes determining the time windows and window offsets as a division of the communication patterns of the wireless data communication between the wireless router and the radio-communication circuitry and establishing the time windows prior to the communication times of the wireless router.

5. The method of any preceding claim, further including establishing the time intervals for the advertising event after the communication times of the wireless router for connecting the combo-endpoint device to other wireless communication devices.

6. A combo-endpoint device (205) configured to communicate according to either a frequency-hopping based protocol and a direct or parallel-sequence spread spectrum based protocol at a given time, the combo-endpoint device comprising:
radio-communication circuitry (206) configured to communicate wirelessly with a wireless router (228) according to a spread spectrum (SS)-based network protocol defined by the wireless router, and wirelessly with a wireless communication device (232-1, 231-M) via a frequency-hopping (FH)-based protocol, which defines connection periods according to time windows and selected frequencies, for communication of data between the wireless communication device and the radio-communication circuitry; and
data-communication scheduling circuitry (212) configured to:
monitor (456, 576) communication patterns of wireless data communications between the wireless router and the radio-communication circuitry to store (456, 576) data indicative of communication times of the wireless router;
configure (458) the FH-based protocol for communication between the wireless communication device and the radio-communication circuitry by providing time windows for the FH-based protocol which is prior to the communication times of the wireless router;
establish (462) time intervals for an advertisement event after communications times of the wireless router for connecting the radio-communication circuitry to other wireless communication devices;
monitor wireless data communication between the wireless communication device and the radio-communication circuitry and configure another FH-based protocol for communication between another wireless communication device and the radio-communication circuitry by providing time windows for the FH-based protocol for the other wireless communication device and which is prior to the time windows for the wireless communication device;
identify a removed connection between the wireless communication device and the radio-communication circuitry; and
in response thereto, shift the time windows for the other wireless communication device to a time prior to the communication times of the wireless router.

7. The combo-endpoint device of claim 6, wherein the data-communication scheduling circuitry is further configured to
monitor communication patterns of wireless data communications between the wireless router and other wireless devices; and
identify window offsets that results in the time windows not overlapping with the communication times of the wireless router based on an identified pattern between the monitored communication patterns between the wireless router and the radio-communication circuitry and the time windows for the FH-based protocol.

8. The combo-endpoint device of claim 6 or 7 wherein the radio-communication circuitry is configured to wirelessly communicate multiple messages during the established time intervals for the advertisement event with at least one other wireless communication device.

9. The combo-endpoint device of any of claims 6 to 8, wherein the data-communication scheduling circuitry is further configured to re-establish a connection with the wireless router by identifying a loss of connection between the radio-communication circuitry and the wireless router, and using the communication times of the wireless router to re-associate with the wireless router.

10. The combo-endpoint device of any of claims 6 to 9 wherein the router is a Zigbee router, the spread spectrum-based protocol is a direct sequence spread spectrum (DSS)-based protocol defined by the ZigBee router, and the frequency-hopping (FH)-based protocol is a frequency-hopping spread spectrum (FHSS)-based protocol which defines Bluetooth Low Energy (BLE) device connection periods, in time windows, for communication of data between the wireless communication device and the radio-communication circuitry.

11. The combo-endpoint device of claim 10, wherein the data-communication scheduling circuitry is further configured to monitor communication patterns of wireless data communications between the ZigBee router and its associated ZigBee (ZB) devices, the combo-endpoint device further including:
a power source configured to provide power to the radio-communication circuitry; and
a power control circuit configured to control connection of the power source to the radio-communication circuitry.

12. The combo-endpoint device of claim 10 or 11, wherein the data-communication scheduling circuitry is further configured to establish the coordinated wireless communication schedules for the radio-communication circuitry to communicate with both the wireless communication device and the ZigBee router by scheduling the FHSS-based protocol for communication between the wireless communication device and the radio-communication circuitry with revised time windows for the FHSS-based data communications and by providing the revised time windows at intervals that are multiples of and prior to the communication times of the ZigBee router.

13. The combo-endpoint device of any of claims 10 to 12, wherein the data-communication scheduling circuitry is further configured to establish the coordinated wireless communication schedules for the radio-communication circuitry to communicate with both the wireless communication device and the ZigBee router by scheduling the FHSS-based protocol for communication between the wireless communication device and the radio-communication circuitry with revised time windows for the FHSS-based data communications and by providing the revised time windows at intervals that are divisions of and prior to the communication times of the ZigBee router.

## Patentansprüche

1. Ein Verfahren zum Kommunizieren zwischen:
einer Kombi-Endpunkt Vorrichtung, welche konfiguriert ist zum Kommunizieren gemäß beiden von einem Frequency-Hopping basierten Protokoll und einem Direkt- oder Parallel Sequenz Spread Spektrum basierten Protokoll bei einer gegebenen Zeit,
einem drahtlosen Router und
einer drahtlosen Kommunikationsvorrichtung,
das Verfahren aufweisend:
Überwachen (456, 576) von Kommunikationsmustern von drahtlosen Datenkommunikationen zwischen einem drahtlosen Router und einem Radio-Kommunikation Schaltkreis von der Kombi-Endpunkt Vorrichtung (205);
Speichern (456, 576) von Daten, welche indikativ sind für Kommunikationszeiten von dem drahtlosen Router basierend auf den überwachten Kommunikationsmustern;
Konfigurieren (458) von einem Frequenzy-Hopping (FH)-basierten Protokoll durch Definieren (460) von Verbindungszeiträumen gemäß Zeitfenstern und selektierten Frequenzen für drahtlose Kommunikation von Daten zwischen der drahtlosen Kommunikationsvorrichtung und dem Radio-Kommunikation Schaltkreis und durch Herstellen (462) von den Zeitfenstern und Zeitintervallen für ein Anzeigeereignis, welches nicht im Widerspruch steht zu den Kommunikationszeiten von dem drahtlosen Router;
Überwachen von drahtloser Datenkommunikation zwischen der drahtlosen Kommunikationsvorrichtung und dem Radio-Kommunikation Schaltkreis und Konfigurieren von einem anderen FH-basierten Protokoll für Kommunikation zwischen einer anderen drahtlosen Kommunikationsvorrichtung und dem Radio-Kommunikation Schaltkreis durch Bereitstellen von Zeitfenstern für das FH-basierte Protokoll für die andere drahtlose Kommunikationsvorrichtung, welche vor den Zeitfenstern für die drahtlose Kommunikationsvorrichtung sind;
Identifizieren von einer entfernten Verbindung zwischen der drahtlosen Kommunikationsvorrichtung und dem Radio-Kommunikation Schaltkreis; und
als Antwort dazu, Verschieben der Zeitfenster für die andere drahtlose Kommunikationsvorrichtung zu einer Zeit vor den Kommunikationszeiten von dem drahtlosen Router.

2. Das Verfahren gemäß Anspruch 1, ferner umfassend:
Überwachen von Kommunikationsmustern von drahtlose Kommunikationen zwischen dem drahtlosen Router und anderen drahtlosen Vorrichtungen; und
wobei das Konfigurieren des FH-basierten Protokolls ferner umfasst
Bestimmen (584) von den Zeitfenstern und Fensterversätzen zwischen den Zeitfenstern als ein Mehrfaches von den Kommunikationszeiten von der drahtlosen Datenkommunikation zwischen dem drahtlosen Router und dem Radio-Kommunikation Schaltkreis und
Herstellen der Zeitfenster vor den Kommunikationszeiten von dem drahtlosen Router.

3. Das Verfahren gemäß Anspruch 2, ferner umfassend
Bestimmen von den Fensterversätzen als ein Zeitraum vor den Kommunikationszeiten von dem drahtlosen Router.

4. Das Verfahren gemäß irgendeinem vorherigen Anspruch,
wobei das Konfigurieren von dem FH-basierten Protokoll ferner umfasst
Bestimmen der Zeitfenster und Fensterversätzen als eine Division von den Kommunikationsmustern von der drahtlosen Datenkommunikation zwischen dem drahtlosen Router und dem Radio-Kommunikation Schaltkreis und
Herstellen der Zeitfenster vor den Kommunikationszeiten von dem drahtlosen Router.

5. Das Verfahren gemäß irgendeinem vorherigen Anspruch, ferner umfassend
Herstellen der Zeitintervalle für das Anzeigeereignis nach den Kommunikationszeiten von dem drahtlosen Router zum Verbinden der Kombi-Endpunkt Vorrichtung zu anderen drahtlosen Kommunikationsvorrichtungen.

6. Eine Kombi-Endpunkt Vorrichtung (205), welche konfiguriert ist zum Kommunizieren gemäß beiden von einem Frequency-Hopping basierten Protokoll und einem Direkt oder Parallel Sequenz Spread Spektrum basierten Protokoll bei einer gegebenen Zeit, die Kombi-Endpunkt Vorrichtung aufweisend:
einen Radio-Kommunikation Schaltkreis (206), welcher konfiguriert ist zum Kommunizieren drahtlos mit einem drahtlosen Router (228) gemäß einem Spread Spektrum (SS)-basierten Netzwerkprotokoll, welches definiert ist durch den drahtlosen Router, und drahtlos mit einer drahtlosen Kommunikationsvorrichtung (231-1, 231-M) via ein Frequency-Hopping (FH)-basiertes Protokoll, welches definiert Verbindungszeiträume gemäß zu Zeitfenstern und selektierten Frequenzen, für Kommunikation von Daten zwischen der drahtlosen Kommunikationsvorrichtung und dem Radio-Kommunikation Schaltkreis; und
einen Datenkommunikation Ablauf Schaltkreis (212), welcher konfiguriert ist zum:
Überwachen (456, 576) von Kommunikationsmustern von drahtlosen Datenkommunikationen zwischen dem drahtlosen Router und dem Radio-Kommunikation Schaltkreis zum Speichern (456, 576) von Daten, welche indikativ sind für Kommunikationszeiten von dem drahtlosen Router;
Konfigurieren (458) von dem FH-basierten Protokoll für Kommunikation zwischen der drahtlosen Kommunikationsvorrichtung und dem Radio-Kommunikation Schaltkreis durch Bereitstellen von Zeitfenstern für das FH-basierte Protokoll, welches vor den Kommunikationszeiten von dem drahtlosen Router ist;
Herstellen (462) von Zeitintervallen für ein Anzeigeereignis nach Kommunikationszeiten von dem drahtlosen Router zum Verbinden des Radio-Kommunikation Schaltkreises zu anderen drahtlosen Kommunikationsvorrichtungen;
Überwachen von drahtloser Datenkommunikation zwischen der drahtlosen Kommunikationsvorrichtung und dem Radio-Kommunikation Schaltkreis und Konfigurieren von einem anderen FH-basierten Protokoll für Kommunikation zwischen einer anderen drahtlosen Kommunikationsvorrichtung und dem Radio-Kommunikation Schaltkreis durch Bereitstellen von Zeitfenstern für das FH-basierte Protokoll für die andere drahtlose Kommunikationsvorrichtung und welche vor den Zeitfenstern von der drahtlosen Kommunikationsvorrichtung sind;
Identifizieren von einer entfernten Verbindung zwischen der drahtlosen Kommunikationsvorrichtung und dem Radio-Kommunikation Schaltkreis; und
als Antwort darauf, Verschieben der Zeitfenster für die andere drahtlose Kommunikationsvorrichtung zu einer Zeit vor den Kommunikationszeiten von dem drahtlosen Router.

7. Die Kombi-Endpunkt Vorrichtung gemäß Anspruch 6,
wobei der Daten-Kommunikation Ablauf Schaltkreis ferner konfiguriert ist zum
Überwachen von Kommunikationsmustern von drahtlosen Daten Kommunikationen zwischen dem drahtlosen Router und anderen drahtlosen Vorrichtungen; und
Identifizieren von Fensterversätzen, welche Führen zu den Zeitfenstern, die nicht Überlappen mit den Kommunikationszeiten von dem drahtlosen Router basierend auf einem identifizierten Muster zwischen den überwachten Kommunikationsmustern zwischen dem drahtlosen Router und dem Radio-Kommunikation Schaltkreis und den Zeitfenstern von dem FH-basierten Protokoll.

8. Die Kombi-Endpunkt Vorrichtung gemäß Anspruch 6 oder 7, wobei der Kommunikationsschaltkreis konfiguriert ist zum drahtlosen Kommunizieren von Mehrfachmeldungen während der hergestellten Zeitintervalle für das Anzeigeereignis mit zumindest einer anderen Kommunikationsvorrichtung.

9. Die Kombi-Endpunkt Vorrichtung gemäß irgendeinem der Ansprüche 6 bis 8,
wobei der Daten-Kommunikation Ablauf Schaltkreis ferner konfiguriert ist zum Wiederherstellen einer Verbindung mit dem drahtlosen Router durch Identifizieren eines Verlustes von Verbindung zwischen dem Radio-Kommunikation Schaltkreis und dem drahtlosen Router und Verwenden der Kommunikationszeiten von dem drahtlosen Router zum Wiederassoziieren mit dem drahtlosen Router.

10. Die Kombi-Endpunkt Vorrichtung gemäß irgendeinem der Ansprüche 6 bis 9,
wobei der Router ein ZigBee Router ist,
wobei das Spread Spektrum basierte Protokoll ein Direkt Sequenz Spread Spektrum (DSS)-basierte Protokoll ist, welches definiert ist durch den Zigbee Router, und das Frequency-Hopping (FH)-basierte Protokoll ein Frequency-Hopping Spread Spektrum (FHSS)-basierte Protokoll ist, welches definiert Bluetooth Low Energy (BLE) Vorrichtung Verbindung Zeiträume, in Zeitfenstern, für Kommunikation von Daten zwischen der drahtlosen Kommunikationsvorrichtung und dem Radio-Kommunikation Schaltkreis.

11. Die Kombi-Endpunkt Vorrichtung gemäß Anspruch 10,
wobei der Daten-Kommunikation Ablauf Schaltkreis ferner konfiguriert ist zum Überwachen von Kommunikationsmustern von drahtlosen Datenkommunikationen zwischen dem ZigBee Router und ihren assoziierten ZigBee (ZB) Vorrichtungen,
die Kombi-Endpunkt Vorrichtung ferner aufweisend:
eine Leistungsquelle, welche konfiguriert ist zum Bereitstellen von Leistung zu dem Radio-Kommunikation Schaltkreis; und
einen Leistung Steuerschaltkreis, welcher konfiguriert ist zum Steuern von Verbindung von der Leistungsquelle zu dem Radio-Kommunikation Schaltkreis.

12. Die Kombi-Endpunkt Vorrichtung gemäß Anspruch 10 oder 11,
wobei der Daten-Kommunikation Ablauf Schaltkreis ferner konfiguriert ist zum Herstellen von den koordinierten drahtlosen Kommunikationsabläufen für den Radio-Kommunikation Schaltkreis zum Kommunizieren mit beiden von der drahtlosen Kommunikationsvorrichtung und dem ZigBee Router durch Ablaufen des FHSS-basierten Protokolls für Kommunikation zwischen der drahtlosen Kommunikationsvorrichtung und dem Radio-Kommunikation Schaltkreis mit revidierten Zeitfenstern für die FHSS-basierten Datenkommunikationen und durch Bereitstellen der revidierten Zeitfenster bei Intervallen, welche ein Mehrfaches sind von und vor den Kommunikationszeiten von dem ZigBee Router sind.

13. Die Kombi-Endpunkt Vorrichtung gemäß irgendeinem der Ansprüche 10 bis 12,
wobei der Daten-Kommunikation Ablauf Schaltkreis ferner konfiguriert ist zum Herstellen des koordinierten drahtlosen Kommunikation Ablaufes für den Radio-Kommunikation Schaltkreis zum Kommunizieren mit beiden von der drahtlosen Kommunikationsvorrichtung und dem ZigBee Router durch Ablaufen des FHSS-basierten Protokolls für Kommunikation zwischen der drahtlosen Kommunikationsvorrichtung und dem Radio-Kommunikation Schaltkreis mit revidierten Zeitfenstern für die FHSS-basierten Datenkommunikationen und durch Bereitstellen der revidierten Zeitfenster bei Intervallen, welche Divisionen sind von und vor den Kommunikationszeiten von dem ZigBee Router sind.

## Revendications

1. Procédé de communication entre :
un dispositif formant des points d'extrémité combinés configuré pour communiquer soit selon un protocole à saut de fréquence, soit selon un protocole à étalement de spectre à séquence parallèle à un moment donné,
un routeur sans fil, et
un dispositif de communication sans fil,
le procédé comprenant :
la surveillance (456, 576) de schémas de communication de communications de données sans fil entre un routeur sans fil et des circuits de radiocommunication du dispositif formant des points d'extrémité combinés (205) ;
l'enregistrement (456, 576) de données indiquant des temps de communication du routeur sans fil sur la base des schémas de communication surveillés ;
la configuration (458) d'un protocole à saut de fréquence (FH) par définition (460) de périodes de connexion selon des fenêtres temporelles et des fréquences sélectionnées pour une communication de données sans fil entre le dispositif de communication sans fil et les circuits de radiocommunication et par établissement (462) des fenêtres temporelles et d'intervalles de temps pour un événement d'annonce qui n'entrent pas en conflit avec les temps de communication du routeur sans fil ;
la surveillance d'une communication de données sans fil entre le dispositif de communication sans fil et les circuits de radiocommunication et la configuration d'une autre protocole à FH pour une communication entre un autre dispositif de communication sans fil et les circuits de radiocommunication par fourniture de fenêtres temporelles pour le protocole à FH pour l'autre dispositif de communication sans fil et avant les fenêtres temporelles pour le dispositif de communication sans fil ;
l'identification d'une connexion supprimée entre le dispositif de communication sans fil et les circuits de radiocommunication ; et
en réponse à cette identification, le décalage des fenêtres temporelles pour l'autre dispositif de communication sans fil à un temps antérieur aux temps de communication du routeur sans fil.

2. Procédé selon la revendication 1, comportant en outre :
la surveillance de schémas de communication de communications de données sans fil entre le routeur sans fil et d'autres dispositifs sans fil ; et
la configuration du protocole à FH comportant en outre la détermination (584) des fenêtres temporelles et des décalages de fenêtres entre les fenêtres temporelles sous forme d'un multiple des temps de communication de la communication de données sans fil entre le routeur sans fil et les circuits de radiocommunication et l'établissement des fenêtres temporelles avant les temps de communication du routeur sans fil.

3. Procédé selon la revendication 2, comportant en outre la détermination des décalages de fenêtres sous forme d'une période de temps antérieure aux temps de communication du routeur sans fil.

4. Procédé selon l'une quelconque des revendications précédentes, dans lequel la configuration du protocole à FH comporte en outre la détermination des fenêtres temporelles et des décalages de fenêtres sous forme d'une division des schémas de communication de la communication de données sans fil entre le routeur sans fil et les circuits de radiocommunication et l'établissement des fenêtres temporelles avant les temps de communication du routeur sans fil.

5. Procédé selon l'une quelconque des revendications précédentes, comportant en outre l'établissement des intervalles de temps pour l'événement d'annonce après les temps de communication du routeur sans fil pour la connexion du dispositif formant des points d'extrémité combinés à d'autres dispositifs de communication sans fil.

6. Dispositif formant des points d'extrémité combinés (205) configuré pour communiquer soit selon un protocole à saut de fréquence, soit selon un protocole à étalement de spectre à séquence parallèle à un moment donné, le dispositif formant des points d'extrémité combinés comprenant :
des circuits de radiocommunication (206) configurés pour communiquer sans fil avec un routeur sans fil (228) selon un protocole de réseau à étalement de spectre (SS) défini par le routeur sans fil, et sans fil avec un dispositif de communication sans fil (232-1, 231-M) au moyen d'un protocole à saut de fréquence (FH), lequel définit des périodes de connexion selon des fenêtres temporelles et des fréquences sélectionnées, pour la communication de données entre le dispositif de communication sans fil et les circuits de radiocommunication ; et
des circuits d'ordonnancement de communications de données (212) configurés pour :
surveiller (456, 576) des schémas de communication de communications de données sans fil entre le routeur sans fil et les circuits de radiocommunication dans le but d'enregistrer (456, 576) des données indiquant des temps de communication du routeur sans fil ;
configurer (458) le protocole à FH pour une communication entre le dispositif de communication sans fil et les circuits de radiocommunication en fournissant des fenêtres temporelles pour le protocole à FH avant les temps de communication du routeur sans fil ;
établir (462) des intervalles de temps pour un événement d'annonce après des temps de communication du routeur sans fil pour la connexion des circuits de radiocommunication à d'autres dispositifs de communication sans fil;
surveiller une communication de données sans fil entre le dispositif de communication sans fil et les circuits de radiocommunication et configurer un autre protocole à FH pour une communication entre un autre dispositif de communication sans fil et les circuits de radiocommunication en fournissant des fenêtres temporelles pour le protocole à FH pour l'autre dispositif de communication sans fil et avant les fenêtres temporelles pour le dispositif de communication sans fil ;
identifier une connexion supprimée entre le dispositif de communication sans fil et les circuits de radiocommunication ; et
en réponse à cette identification, décaler les fenêtres temporelles pour l'autre dispositif de communication sans fil à un temps antérieur aux temps de communication pour le routeur sans fil.

7. Dispositif formant des points d'extrémité combinés selon la revendication 6, dans lequel les circuits d'ordonnancement de communications de données sont configurés en outre pour :
surveiller des schémas de communication de communications de données sans fil entre le routeur sans fil et d'autres dispositifs sans fil ; et
identifier des décalages de fenêtres pour faire en sorte que les fenêtres temporelles ne chevauchent pas les temps de communication du routeur sans fil sur la base d'un schéma identifié entre les schémas de communication surveillés entre le routeur sans fil et les circuits de radiocommunication et les fenêtres temporelles pour le protocole à FH.

8. Dispositif formant des points d'extrémité combinés selon la revendication 6 ou 7, dans lequel les circuits de radiocommunication sont configurés pour communiquer sans fil de multiples messages au cours des intervalles de temps établis pour l'événement d'annonce avec au moins un autre dispositif de communication sans fil.

9. Dispositif formant des points d'extrémité combinés selon l'une quelconque des revendications 6 à 8, dans lequel les circuits d'ordonnancement de communications de données sont configurés en outre pour rétablir une connexion avec le routeur sans fil en identifiant une perte de connexion entre les circuits de radiocommunication et le routeur sans fil et en utilisant les temps de communication du routeur sans fil pour se réassocier au routeur sans fil.

10. Dispositif formant des points d'extrémité combinés selon l'une quelconque des revendications 6 à 9, dans lequel le routeur est un routeur ZigBee, le protocole à étalement de spectre est un protocole à étalement de spectre à séquence directe (DSS) défini par le routeur ZigBee et le protocole à saut de fréquence (FH) est un protocole à étalement de spectre par saut de fréquence (FHSS) qui définit des périodes de connexion de dispositif Bluetooth basse consommation (BLE), dans des fenêtres temporelles, pour une communication de données entre le dispositif de communication sans fil et les circuits de radiocommunication.

11. Dispositif formant des points d'extrémité combinés selon la revendication 10, dans lequel les circuits d'ordonnancement de communications de données sont configurés en outre pour surveiller des schémas de communication de communications de données sans fil entre le routeur ZigBee et ses dispositifs ZigBee (ZB) associés, le dispositif formant des points d'extrémité combinés comportant en outre :
une source d'alimentation configurée pour alimenter les circuits de radiocommunication ; et
un circuit de commande d'alimentation configurée pour commander la connexion de la source d'alimentation aux circuits de radiocommunication.

12. Dispositif formant des points d'extrémité combinés selon la revendication 10 ou 11, dans lequel les circuits d'ordonnancement de communications de données sont configurés en outre pour établir les ordonnancements de communications sans fil coordonnées permettant aux circuits de radiocommunication de communiquer à la fois avec le dispositif de communication sans fil et le routeur ZigBee en ordonnançant le protocole à FHSS pour une communication entre le dispositif de communication sans fil et les circuits de radiocommunication à l'aide de fenêtres temporelles révisées pour les communications de données à FHSS et en fournissant les fenêtres temporelles révisées à des intervalles constituant des multiples des temps de communication du routeur ZigBee et qui leur sont antérieurs.

13. Dispositif formant des points d'extrémité combinés selon l'une quelconque des revendications 10 à 12, dans lequel les circuits d'ordonnancement de communications de données sont configurés en outre pour établir les ordonnancements de communications sans fil coordonnées permettant aux circuits de radiocommunication de communiquer à la fois avec le dispositif de communication sans fil et le routeur ZigBee en ordonnançant le protocole à FHSS pour une communication entre le dispositif de communication sans fil et les circuits de radiocommunication à l'aide de fenêtres temporelles révisées pour les communications de données à FHSS et en fournissant les fenêtres temporelles révisées à des intervalles constituant des divisions des temps de communication du routeur ZigBee et qui leur sont antérieurs.
